# EUROPÄISCHE PATENTSCHRIFT

(11) **EP 0 968 397 B1**
(45) Veröffentlichungstag und Bekanntmachung des Hinweises auf die Patenterteilung: **11.12.2002**
(21) Anmeldenummer: 98966492.5
(22) Anmeldetag: 19.11.1998
(51) Int. Cl.: F28C 1/14, F28F 25/02

(54) **HYBRIDKÜHLTURM**
HYBRID COOLING TOWER
TOUR DE REFROIDISSEMENT HYBRIDE

(30) Priorität: 11.12.1997 DE 19754995
(43) Veröffentlichungstag der Anmeldung: 05.01.2000
(73) Patentinhaber: Gea Kühlturmbau Gmbh, 44809 Bochum (DE)
(72) Erfinder: VODICKA, Vladimir, D-44801 Bochum (DE); KATZMANN, Arno, D-45529 Hattingen (DE)
(74) Vertreter: Bockermann, Rolf, Dipl.-Ing.
(86) Internationale Anmeldenummer: DE9803448
(87) Internationale Veröffentlichungsnummer: WO99030096

(56) Entgegenhaltungen:
- EP-A- 0 017 517
- EP-A- 0 054 843
- EP-A- 0 354 506
- EP-A- 0 661 512
- AU-A- 6 835 874
- DE-A- 2 743 601
- DE-A- 19 611 617
- US-A- 3 994 999
- PATENT ABSTRACTS OF JAPAN vol. 015, no. 025 (M-1071), 21. Januar 1991 -& JP 02 267492 A (HITACHI METALS LTD), 1. November 1990
- PATENT ABSTRACTS OF JAPAN vol. 097, no. 002, 28. Februar 1997 -& JP 08 261666 A (NIPPON SPINDLE MFG CO LTD), 11. Oktober 1996

## Beschreibung

Die Erfindung betrifft einen Hybridkühlturm.

In einem Hybridkühlturm (Nass-Trocken-Kühlturm) gemäß der DE 196 11 627 A1 wird eine Teilmenge des aus einem Kühlprozess stammenden zu kühlenden Warmwassers in einem Nasskühlteil und die andere Teilmenge in einem Trockenkühlteil durch Luft gekühlt. Das Warmwasser kann aber auch zunächst komplett durch den Trockenkühlteil und anschließend durch den Nasskühlteil geführt sein.

Das über den Nasskühlteil geführte Warmwasser wird von einer sich über den wesentlichen Teil des Turmquerschnitts erstreckenden Wasserverteilung auf darunter befindliche Rieseleinbauten gesprüht. Aus den Rieseleinbauten tropft das gekühlte Wasser in ein Sammelbecken, von wo es wieder dem Kühlprozess zugeführt wird. Die das Warmwasser im Nasskühlteil kühlende Luft strömt durch unterhalb der Rieseleinbauten in der Turmwand befindliche Lufteintrittsöffnungen ein und im Gegenstrom nach oben. Zur Förderung des Luftstroms ist in die am oberen Ende des Hybridkühlturms befindliche Turmabströmöffnung ein saugend wirkender Ventilator integriert.

Dieser Ventilator saugt auch die Kühlluft über die oberhalb der Wasserverteilung umfangsseitig des Kühlturms angeordneten Trockenkühlelemente des Trockenkühlteils. In dem Bereich zwischen der Wasserverteilung, den Trockenkühlelementen und dem Ventilator sind Luftmischeinbauten vorgesehen.

Um einen Hybridkühlturm schwadenfrei betreiben zu können, muss den mit Feuchtigkeit gesättigten Schwaden des Nasskühlteils ein ausreichend großer Anteil an warmer und ungesättigter Luft aus dem Trockenkühlbauteil beigemischt werden. Als schwadenfrei arbeitend wird dann ein Hybridkühlturm bezeichnet, wenn die Mischgrade zwischen dem Zustand der Umgebungsluft und der Luft an der Turmmündung die Sättigungslinie nicht überschreiten.

Mit fallender Temperatur der Umgebungsluft steigt der für die Erzielung der Schwadenfreiheit erforderliche Anteil an trockener Luft deutlich an bzw. bei einer maximal möglichen Trockenluftmenge muss der Anteil an Nassluft reduziert werden.

Um diesem Sachverhalt Rechnung zu tragen, sieht der Stand der Technik z.B. Rolltore bzw. Jalousien vor, die an den Lufteintrittsöffnungen für den Nasskühlteil und/oder an den Lufteintrittsöffnungen des Trockenkühlteils vorgesehen sein können. Eine derartige Anordnung ist in dem Aufsatz "Der Hybridkühlturm für das 2 x 600 MW - Heizkraftwerk West der Stadtwerke Frankfurt am Main" beschrieben (Zeitschrift "Kraftwerke", 1990, S. 237-241).

Die Verwendung von Rolltoren bzw. Jalousien an den Lufteintrittsöffnungen für den Nasskühlteil bedarf indessen besonderer Maßnahmen, um ihre Funktion auch im Winter sicherzustellen. Hierzu sind beispielsweise Begleitheizungen usw. bekannt.

Auch die US-PS 3,994,999 sieht bei einem Hybridkühlturm an den Lufteintrittsöffnungen für den Nasskühlteil Jalousien vor. Die Lufteintrittsöffnungen erstrecken sich über die gesamte Höhe des Nasskühlteils. Luftmischeinbauten sind nicht vorgesehen.

Insgesamt erweist sich bei diesem Stand der Technik, dass der Aufwand für die Installation und den funktionsgerechten Betrieb der Rolltore und Jalousien sehr hoch ist. Meistens ist es auch erforderlich, den saugend arbeitenden Ventilator entsprechend den jeweiligen örtlichen Verhältnissen regeln zu müssen.

Aus der DE 27 43 601 A1 ist ein Hybridkühlturm bekannt, der in dem Bereich zwischen der Wasserverteilung, den Trockenkühlelementen und dem Ventilator keine Luftmischeinbauten aufweist. Bei diesem Hybridkühlturm ist jedoch zusätzlich zu der sich oberhalb der Rieseleinbauten erstreckenden Wasserverteilung eine weitere Wasserverteilung etwa im mittleren Höhenbereich der Rieseleinbauten vorgesehen. Beide Wasserverteilungen erstrecken sich über den gesamten Querschnitt der Rieseleinbauten. Die beiden Wasserverteilungen können je nach den Umgebungsbedingungen zu- und abgeschaltet werden.

Die DE 29 01 156 A1 zeigt einen reinen Nassköhlturm, bei welchem zur Frostschutzsicherung im Winter die oberhalb der Rieseleinbauten liegende Wasserverteilung in Bereiche aufgeteilt ist, die zu- und abgeschaltet werden können. Auf diese Weise strömt die von unten in die Rieseleinbauten eintretende Luft einmal durch Bereiche, die mit Wasser beaufschlagt werden und einmal durch Bereiche, die keine Beaufschlagung erfahren. Durch die Reduzierung der Wärmeaustauschfläche und gleichzeitige Erhöhung der Regendichte erreicht man einen frostsicheren Betrieb. Dabei spielt der Zustand der aus den unterschiedlich beaufschlagten Flächen austretenden Luft keine Rolle bei der Regelung.

Der Erfindung liegt - ausgehend vom Stand der Technik - die Aufgabe zugrunde, einen Hybridkühlturm zu schaffen, der einen schwadenfreien Betrieb bei merklich vermindertem Gestehungs- und Betriebsaufwand gewährleistet.

Diese Aufgabe wird nach der Erfindung mit den im Patentanspruch 1 angegebenen Merkmalen gelöst.

Dadurch, dass jetzt bestimmte Abschnitte der Wasserverteilung von der Wasserzufuhr abschaltbar sind, kann in Abhängigkeit von der Temperatur der Umgebungsluft der Anteil der aus dem Nasskühlteil tretenden, mit Feuchtigkeit gesättigten Luft in Relation zu dem Anteil der aus dem Trockenkühlteil tretenden ungesättigten Luft gezielt geregelt werden. Der Hybridkühlturm ist somit immer schwadenfrel zu betreiben. Folglich kann im Winter ein Betrieb ohne Vereisung gewährleistet werden.

Ein wesentlicher Vorteil der Erfindung besteht darin, dass die bislang notwendigen Regelaggregate wie Rolltore, Jalousien, zusätzliche Ventilatoren und die dazugehörigen Steuer- und Antriebseinrichtungen, jetzt komplett entfallen können. Der Aufwand für die Erstellung und den Betrieb eines Hybridkühlturms wird dadurch deutlich gesenkt.

Darüber hinaus ist es im Rahmen der Erfindung von Vorteil, dass der in die Turmabströmöffnung eingegliederte, saugend oder drückend wirksame Ventilator stets mit annähernd gleicher Luftmenge und Pressung arbeitet, so dass er nicht für einen besonderen Einsatzfall ausgelegt werden muss. Es kann ein standardisierter Ventilator eingesetzt werden.

Die Erfindung kann sowohl bei im horizontalen Querschnitt runden Hybridkühltürmen als auch bei solchen mit eckiger Konfiguration angewendet werden. Das Abschalten eines Abschnitts oder mehrerer Abschnitte kann z.B. mit Hilfe von Absperrorganen, wie Ventile bewirkt werden.

Der Trockenkühlteil kann vertikal und/oder horizontal angeordnete Rippenrohre aufweisen.

Entsprechend einer vorteilhaften Ausführungsform der Erfindung ist nach Patentanspruch 2 ein benachbart der Turmachse liegender Abschnitt der Wasserverteilung von der Wasserzufuhr abschaltbar. Mit einer solchen Kernschaltung kann in vorteilhafter Weise die in der Kühlturmmitte auftretende starke Übersättigung der aus dem Nasskühlteil tretenden, mit Feuchtigkeit gesättigten Luft gesenkt werden. Hierdurch wird der Bedarf an trockener Luft reduziert.

Um eine stufenweise Anpassung des Abluftzustands des Hybridkühlturms an die Außenluftbedingungen sowie an die thermische Belastung zu ermöglichen, ist gemäß Patentanspruch 3 der von der Wasserzufuhr abschaltbare Abschnitt in voneinander unabhängige Teilabschnitte aufgegliedert.

Die Erfindung ist nachfolgend anhand von in den Zeichnungen dargestellten Ausführungsbeispieten näher erläutert. Es zeigen:
- Figur 1: im schematischen vertikalen Querschnitt einen Hybridkühlturm;
- Figur 2: einen horizontalen Querschnitt durch die Darstellung der Figur 1 entlang der Linie II-II und die
- Figuren 3 und 4: Varianten der Darstellung der Figur 2.

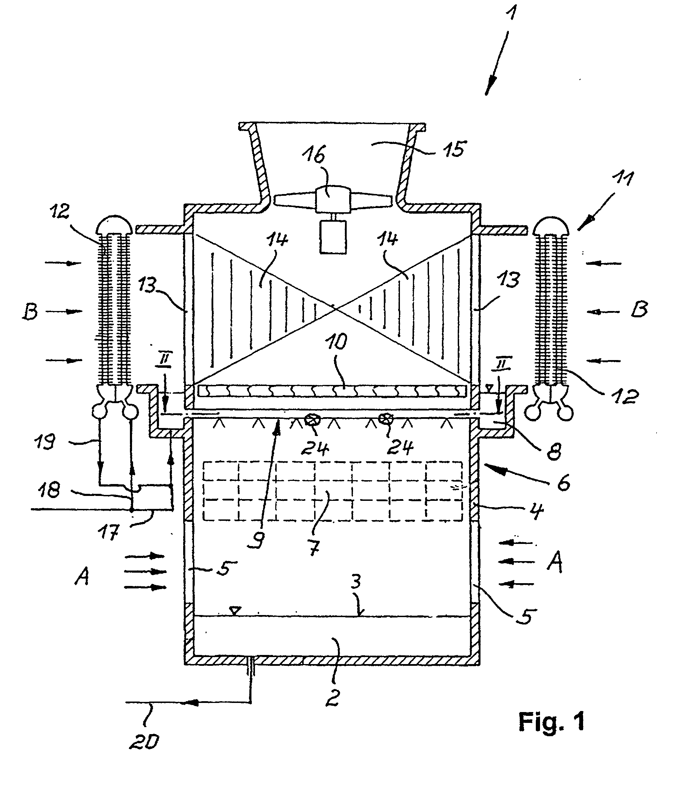

Mit 1 ist in der Figur 1 ein Hybridkühlturm bezeichnet. in dem Hybridkühlturm 1 wird in einem Kühlprozess, z.B. in einem Turbinendampf-Kondensator erwärmtes Kühlwasser rückgekühlt.

Der Hybridkühlturm 1 weist im horizontalen Querschnitt eine eckige Konfiguration auf. Im Bodenbereich ist ein Sammelbecken 2 für das rückgekühlte Kühlwasser ausgebildet. Über dem Wasserspiegel 3 ist die Turmwandung 4 durchbrochen, so dass Lufteintrittsöffnungen 5 gebildet sind. Oberhalb der Lufteintrittsöffnungen 5 ist ein Nasskühlteil 6 angeordnet. Dieser weist Rieseleinbauten 7 auf, welche sich über den gesamten Turmquerschnitt erstrecken. Die Rieseleinbauten 7 werden von einem Kanal 8 aus mit erwärmtem Kühlwasser beschickt, der den Hybridkühlturm 1 außenseitig umgibt. Dabei wird das erwärmte ...

Kühlwasser von dem Kanal 8 aus über eine Wasserverteilung 9 auf die Rieseleinbauten 7 gesprüht und fällt von den Rieseleinbauten 7 in das Sammelbecken 2.

Die gemäß den Pfeilen A durch die Lufteintrittsöffnungen 5 radial in den Hybridkühlturm 1 eintretende Kühlluft strömt entgegen dem herabrieselnden Kühlwasser nach oben durch die Rieseleinbauten 7 und nimmt dabei Feuchtigkeit auf, wodurch das Kühlwasser abgekühlt wird. Danach durchströmt diese mit Feuchtigkeit angereicherte Luft Tropfenabscheider 10, welche über den Querschnitt des Hybridkühlturms 1 angeordnet sind.

Oberhalb des Kanals 8 zur Beschickung des Nasskühlteils ist am Außenumfang des Hybridkühlturms 1 ein Trockenkühlteil 11 angeordnet. Der Trockenkühlteil 11 besteht aus Wärmetauschelementen 12 in Form von vertikal angeordneten Rippenrohren. Die gemäß den Pfeilen B die Wärmetauschelemente 12 durchströmende und dort Wärme aufnehmende Kühlluft gelangt durch Lufteintrittsöffnungen 13 in der Turmwandung 4 in das Innere des Hybridkühlturms 1 und vermischt sich aufgrund der hier angeordneten Luftmischeinbauten 14 mit der nach oben aufsteigenden, mit Feuchtigkeit angereicherten Kühlluft aus dem Nasskühlteil 6.

In die am oberen Ende des Hybridkühlturms 1 vorgesehene Turmabströmöffnung 15 ist ein saugend wirksamer Ventilator 16 eingegliedert.

Das im Kühlprozess erwärmte Kühlwasser wird über eine Leitung 17 dem Kanal 8 und über eine Leitung 18 den Wärmetauschelementen 12 zugeführt. Das aus dem Trockenkühlteil 11 tretende rückgekühlte Kühlwasser wird über eine Leitung 19 in die Leitung 17 überführt. Das im Nasskühlteil rückgekühlte Kühlwasser wird über eine Leitung 20 dem Kühlprozess zugeführt.

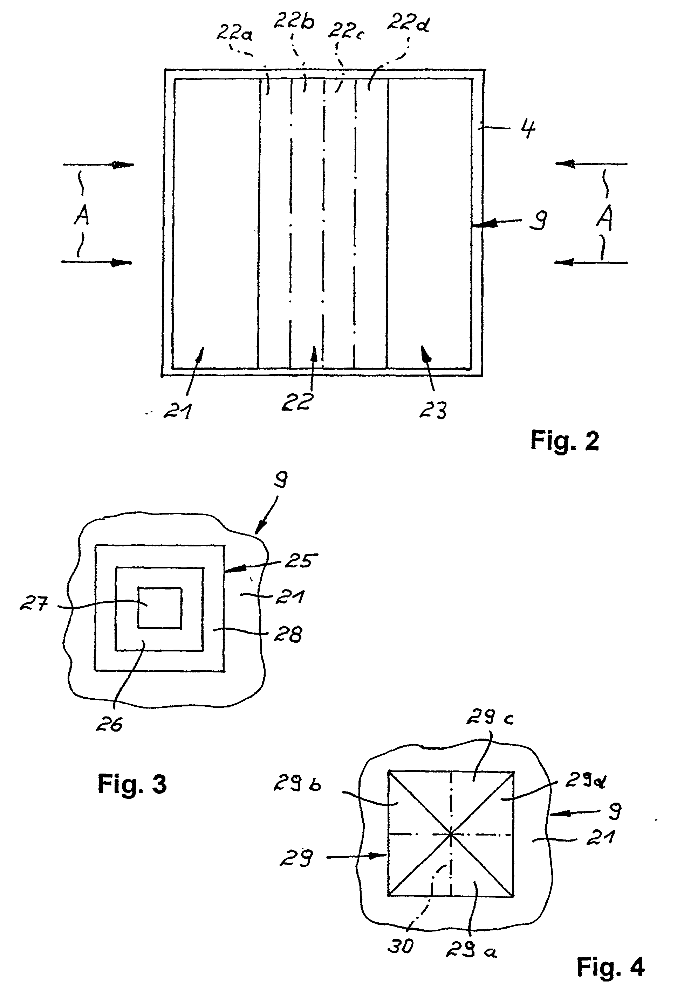

Wie die Figur 2 im Schema erkennen lässt, ist die Wasserverteilung 9 in drei Abschnitte 21, 22, 23 aufgegliedert. Hierbei ist der mittlere Abschnitt 22 mit Hilfe von in der Figur 1 angedeuteten Absperrorganen 24 von der Wasserzufuhr aus dem Kanal 8 abschaltbar.

Der mittlere Abschnitt 22 der Wasserverteilung 9 kann gemäß der strichpunktierten Linienführung in Figur 2 nochmals in Teilabschnitte 22a-d aufgegliedert sein, hier in vier gleich große Teilabschnitte 22a-d streifenartiger Konfiguration.

Die Figur 3 zeigt eine Ausführungsform der Wasserverteilung 9, bei welcher ein zentraler Abschnitt 24 in konzentrischer Form in Teilabschnitte 25-27 aufgegliedert ist, die getrennt voneinander von der Wasserzufuhr aus dem Kanal 8 abschaltbar sind.

Die Figur 4 zeigt eine Ausführungsform der Wasserverteilung 9, in welcher ein zentraler Abschnitt 28 gleichmäßig in dreieckige segmentartige Teilabschnitte 28a-d aufgegliedert ist, die jeweils für sich und unabhängig voneinander aus dem Kanal 8 beaufschlagbar bzw. von der restlichen Wasserverteilung 9 abschaltbar sind. Diese Teilabschnitte 28a-d können gemäß den strichpunktierten Linienführungen 29 bei Bedarf noch weiter unterteilt werden und insofern für sich, das heißt unabhängig von den anderen Teilabschnitten von der Wasserzufuhr aus dem Kanal 8 abgetrennt werden.

### Bezugszeichenaufstellung

- 1 -: Hybridkühlturm
- 2 -: Sammelbecken
- 3 -: Wasserspiegel
- 4 -: Turmwandung
- 5 -: Lufteintrittsöffnungen
- 6 -: Nasskühlteil
- 7 -: Rieseleinbauten
- 8 -: Kanal
- 9 -: Wasserverteilung
- 10 -: Tropfenabscheider
- 11 -: Trockenkühlteil
- 12 -: Wärmetauschelemente
- 13 -: Lufteintrittsöffnungen
- 14 -: Luftmischeinbauten
- 15 -: Turmabströmöffnung
- 16 -: Ventilator
- 17 -: Leitung
- 18 -: Leitung
- 19 -: Leitung
- 20 -: Leitung
- 21 -: Abschnitt v. 9
- 22 -: Abschnitt v. 9
22a - Teilabschnitt
22b - Teilabschnitt
22c - Teilabschnitt
22d - Teilabschnitt
- 23 -: Abschnitt v. 9
- 24 -: Absperrorgane
- 25 -: zentraler Abschnitt
- 26 -: Teilabschnitt
- 27 -: Teilabschnitt
- 28 -: Teilabschnitt
- 29 -: zentraler Abschnitt
29a - Teilabschnitt
29b - Teilabschnitt
29c - Teilabschnitt
29d - Teilabschnitt
- 30 -: strichpunktierte Linien

- A -: Kühlluft
- B -: Kühlluft

## Patentansprüche

1. Hybridkühlturm, der oberhalb von Rieseleinbauten (7) eine sich über zumindest den wesentlichen Teil des Turmquerschnitts erstreckende Wasserverteilung (9), unterhalb der Rieseleinbauten (7) Lufteintrittsöffnungen (5) in der Turmwandung (4), oberhalb der Wasserverteilung (9) umfangsseitige, von Kühlluft (B) quer beaufschlagte Trockenkühlelemente (12), einen in die Turmabströmöffnung (15) eingegliederten, saugend wirksamen Ventilator (16) und im Bereich zwischen der Wasserverteilung (9), den Trockenkühlelementen (12) und dem Ventilator (16) Luftmischeinbauten (14) aufweist, wobei mindestens ein Abschnitt (22, 24, 28) der Wasserverteilung (9) von der Wasserzufuhr abschaltbar ist.

2. Hybridkühlturm nach Patentanspruch 1, bei welchem ein benachbart der Turmachse liegender Abschnitt (22, 24, 28) der Wasserverteilung (9) von der Wasserzufuhr (8) abschaltbar Ist.

3. Hybridkühlturm nach Patentanspruch 1 oder 2, bei welchem der von der Wasserzufuhr (8) abschaltbare Abschnitt (22, 24, 28) in voneinander unabhängige Teilabschnitte (22a-d; 24a-d; 25, 26, 27; 28a-d) aufgegliedert ist.

## Claims

1. A hybrid cooling tower comprising, above trickle furniture (7), a water distribution system (9) extending over at least the main part of the tower cross-section, and comprising beneath the trickle furniture (7) air inlet openings (5) in the tower wall (4), further comprising above the water distribution system (9) peripheral dry cooling elements (12) subjected to a transverse flow of cooling air (B), a fan (16) with a suction action incorporated in the tower outflow opening (15), and, in the region between the water distribution system (9), the dry cooling elements (12), and the fan (16), air mixing furniture (14), at least one portion (22, 24, 28) of the water distribution system (9) being disconnectable from the water supply.

2. A hybrid cooling tower according to claim 1, wherein a portion (22, 24, 28) of the water distribution system (9) adjacent the tower axis is disconnectable from the water supply (8).

3. A hybrid cooling tower according to claim 1 or 2, wherein the portion (22, 24, 18) disconnectable from the water supply (8) is divided up into sub-portions (22a-d; 24a-d; 25, 26, 27; 28a-d) which are independent of one another.

## Revendications

1. Tour de refroidissement hybride comportant, au-dessus d'une installation d'écoulement (7), une distribution d'eau (9) s'étendant au moins sur l'essentiel de la section transversale de la tour, comportant, au-dessous de l'installation d'écoulement (7), des orifices d'admission d'air (5) dans la paroi (4) de la tour, comportant, au-dessus de la distribution d'eau (9), des éléments de refroidissement à sec (12), soumis transversalement à de l'air de refroidissement (B), un ventilateur (16) à action aspirante, intégré dans un orifice d'évacuation (15) de 1a tour et comportant, dans la zone entre la distribution d'eau (9), les éléments de refroidissement à sec (12) et le ventilateur (16), une installation de mélange d'air (14), dans laquelle au moins une partie (22, 24, 28) de la distribution d'eau (9) peut être coupée d'approvisionnement en eau.

2. Tour de refroidissement hybride selon la revendication 1, dans laquelle une partie (22, 24, 28) de la distribution d'eau (9), voisine de l'axe de la tour, peut être coupée d'approvisionnement en eau (8).

3. Tour de refroidissement hybride selon la revendication 1 ou 2, dans laquelle la partie (22, 24, 28) qui peut être coupée d'approvisionnement en eau (8) est subdivisée en sections (22a-d, 24a-d ; 25, 26, 27 ; 28a-d) indépendantes les uns des autres.
